# EUROPÄISCHE PATENTSCHRIFT

(11) **EP 2 805 365 B1**
(45) Veröffentlichungstag und Bekanntmachung des Hinweises auf die Patenterteilung: **14.03.2018**
(21) Anmeldenummer: 13700256.4
(22) Anmeldetag: 14.01.2013
(51) Int. Cl.: H01M 2/10, H01M 2/20, H01M 10/04, H01M 10/60, H01G 2/10, H01G 2/04, H01G 9/08, H01G 9/26, H01G 11/10, H01G 11/82, H01M 10/613, H01M 10/643, H01M 10/6567, H01M 10/6557, H01G 4/38

(54) **ANORDNUNG, INSBESONDERE ENERGIESPEICHERZELLENANORDNUNG**
ARRANGEMENT, IN PARTICULAR ENERGY STORAGE CELL ARRANGEMENT
AGENCEMENT, EN PARTICULIER AGENCEMENT DE CELLULES D'ACCUMULATION D'ÉNERGIE

(30) Priorität: 20.01.2012 DE 102012000996
(43) Veröffentlichungstag der Anmeldung: 26.11.2014
(73) Patentinhaber: Sew-Eurodrive GmbH & Co. KG, 76646 Bruchsal (DE)
(72) Erfinder: SCHIFFMANN, Sebastian, 76709 Kronau (DE); SCHMIDT, Josef, 76676 Graben-Neudorf (DE); HAUCK, Matthias, 68723 Schwetzingen (DE); LAMPERT, Christian, 76646 Bruchsal (DE); TRITSCHLER, Daniel, 76646 Bruchsal (DE)
(86) Internationale Anmeldenummer: PCT/EP2013/000086
(87) Internationale Veröffentlichungsnummer: WO 2013/107625

(56) Entgegenhaltungen:
- EP-A1- 2 101 336
- EP-A2- 2 284 928
- WO-A1-2012/133000
- WO-A2-2010/056750
- BE-A1- 769 121
- DE-A1- 4 023 249
- US-A1- 2008 160 392
- US-A1- 2011 008 667

## Beschreibung

Die Erfindung betrifft eine Anordnung, insbesondere Energiespeicherzellenanordnung.

Es ist allgemein bekannt, auf einer Leiterplatte Bauelemente zu bestücken und mittels eines Wellenlötbades Lötverbindungen herzustellen.

Aus der WO 2010/056750 A2 ist ein Batteriesystem mit Wärmetauscher bekannt.

Aus der EP 2 284 928 A2 ist ein Batteriepack mit verbesserter Wärmeabfuhr bekannt.

Aus der DE 40 23 249 A1 ist eine Befestigungsvorrichtung für Kondensatoren bekannt.

Aus der US 2011/008667 A1 ist ein Batteriepack bekannt, welches eine Vielzahl von Einzelzellen umfasst.

Aus der EP 2 101 336 A1 ist eine Akkumulatoranordnung zum Speichern elektrischer Energie bekannt.

Aus der BE 729 121 A1 ist eine Plastik-Aufnahmevorrichtung für Akkumulatoren bekannt.

Aus der WO 2012/133000 A1 ist eine elektrische Speicheranordnung bekannt.

Der Erfindung liegt daher die Aufgabe zugrunde, eine Anordnung, insbesondere Energiespeicherzellenanordnung, weiterzubilden.

Erfindungsgemäß wird die Aufgabe bei der Anordnung, insbesondere Energiespeicherzellenanordnung, nach den in Anspruch 1 angegebenen Merkmalen gelöst.

Wichtige Merkmale der Erfindung bei der Anordnung, insbesondere Energiespeicherzellenanordnung, sind, dass sie
- Bauelemente, mit elektrischen Anschlusselementen
- eine Leiterplatte
- ein erstes Gehäuseteil aufweist, wobei die Bauelemente Energiespeicherzellen sind, wobei die Bauelemente zumindest kraftschlüssig mit dem Gehäuseteil verbunden sind und
   wobei die elektrischen Anschlusselemente der Bauelemente mit der Leiterplatte, insbesondere mit jeweiligen Leiterbahnabschnitten der Leiterplatte, stoffschlüssig verbunden, insbesondere lötverbunden, sind.

Von Vorteil ist dabei, dass während des Lötvorgangs mittels des Gehäuseteils ein mechanischer Halt der Energiespeicherzellen erreichbar ist. Das Gehäuseteil ist als Löthilfe und auch als Transporthilfe verwendbar. Zur Bildung des Gehäuses sind zwei baugleiche Gehäuseteile verwendet. Auf diese Weise ist mit einer geringen Teilezahl das Gehäuse ausbildbar.

Erfindungsgemäß sind somit die Bauelemente mit ihrem von der Leiterplatte abgewandten Endbereich zunächst nur mit dem Gehäuseteil verbunden und werden danach durch das Lötbad gefahren, so dass die Lötverbindungen zwischen den Bauelementen und der Leiterplatte verspannungsfrei gebildet werden. Daher ist das Gehäuseteil als Löthilfe einsetzbar und muss nach dem Lötverbinden nicht mehr entfernt werden von den Bauelementen. Somit werden Verspannungen vermieden, die bei nachträglichem Verbinden der Bauelemente mit Gehäuseteil entstehen könnten. Insbesondere werden also Kraftlinien im Gehäuseteil vermieden, die von einem Aufnahmebereich zu einem anderen Aufnahmebereich führen könnten. Das kraftschlüssige Halten der Bauelemente wird durch Klemmelemente bewirkt, welche zwar Kraftlinien erzeugen, da sie elastisch verformt werden, jedoch führen diese Kraftlinien nur vom Klemmelement zu einem anderen Klemmelement oder Stützabschnitt des selben Aufnahmebereichs.

Bei einer vorteilhaften Ausgestaltung sind die Bauelemente zwischen dem ersten Gehäuseteil und der Leiterplatte angeordnet. Von Vorteil ist dabei, dass das Gehäuseteil nicht durch das das Lötzinn des Lötbades gefahren werden muss, sondern als Löthilfe, also Halteteil, fungiert. Somit ist eine Beabstandung erreicht. Erfindungsgemäß weist das Gehäuseteil zumindest einen Aufnahmebereich auf, in welchen zumindest ein Abschnitt eines Bauelements eingeführt und von zumindest einem Klemmelement kraftschlüssig gehalten ist,

insbesondere wobei das Gehäuseteil zumindest Aufnahmebereiche aufweist, in welchen jeweils zumindest ein Abschnitt eines jeweiligen Bauelements eingeführt und von zumindest einem jeweiligen Klemmelement kraftschlüssig gehalten ist. Von Vorteil ist dabei, dass die Anordnung, also die relative Lage der Bauelemente zueinander, mittels des Gehäuseteils festlegbar ist. Insbesondere ist also ein Anordnung nach Art einer zweidimensionalen Gitterstruktur ermöglicht, wobei die Bauelemente nur einen sehr geringen Abstand zueinander aufweisen. Die elektrische Isolierung zwischen den Bauelementen ist mittels Luft und auch durch Teilabschnitte des Gehäuseteils, wie beispielsweise Klemmelemente und/oder Stützelemente, erreichbar.

Erfingdungsgemäß ist das Klemmelement am Gehäuseteil angeordnet und ist
- als elastisch verformbarer Bereich des Gehäuseteils einstückig am Gehäuseteil ausgeformt.

Von Vorteil ist dabei, dass eine einfache Herstellung des Klemmelements ausführbar ist. Erfindungsgemäß ist einem jeweiligen Klemmelement am Rand des Aufnahmebereichs diametral gegenüber ein weiteres Klemmelement oder ein Stützabschnitt angeordnet. Von Vorteil ist dabei, dass die Kraftlinien möglichst hohe Klemmwirkung haben.

Bei einer vorteilhaften Ausgestaltung weist das Bauelement zumindest einen zylindrischen, insbesondere kreiszylindrischen, Abschnitt auf,
insbesondere wobei der Aufnahmebereich ebenfalls als zylindrischer, insbesondere kreiszylindrischer, Abschnitt ausgebildet ist. Von Vorteil ist dabei, dass eine einfache Verbindung zwischen Bauelement und Aufnahmebereich erreichbar ist und dass die Drehlage durch die Anschlussbeinchen der Bauelemente, welche in Bohrungen der Leiterplatte eingesteckt sind, festgelegt werden.

Bei einer vorteilhaften Ausgestaltung ist das Gehäuseteil aus einem elektrisch isolierenden Kunststoff ausgebildet,

insbesondere wobei zumindest ein Teilabschnitt des Gehäuseteils aus transparentem Material gebildet ist, so dass auf der Leiterplatte angeordnete Anzeigeelemente von außen sichtbar sind. Von Vorteil ist dabei, dass die elektrische Isolation zwischen den Bauelemente durch das Gehäuseteil ausführbar ist, welches auch zur Abfuhr der Wärme dient. Somit fungiert das Gehäuseteil auch als Kühlkörper. Außerdem ist bei transparenter Ausführung auch ein optisches Anzeigen von Informationen ermöglicht, nämlich beispielsweise eine einem jeweiligen Status entsprechende Farbe oder dergleichen.

Bei einer vorteilhaften Ausgestaltung weist das Gehäuseteil zumindest einen am Gehäuseteil einstückig ausgeformten Erhebungsbereich auf, der in einem Zwischenraumbereich hineinragt, welcher zwischen, insbesondere vier, zueinander nächstbenachbarte Bauelemente hineinragt. Von Vorteil ist dabei, dass die beiden das Gehäuse bildenden Gehäuseteile aneinander nicht nur durch ihre Außenwände sondern auch durch die Erhebungsbereiche aneinander festlegbar sind. Insbesondere bei hohler Ausführung der Erhebungsbereiche ist somit Wärme abtransportierbar.

Bei einer vorteilhaften Ausgestaltung weist zumindest ein Erhebungsbereich einen Kühlkanal auf, insbesondere einen durch den Erhebungsbereich durchgehenden Kühlkanal, insbesondere einen mittig im Erhebungsbereich angeordneten Kühlkanal. Von Vorteil ist dabei, dass die Erhebungsbereiche und somit die Gehäuseteile auch als Kühlkörper fungieren. Denn mittels der Kühlkanäle der Erhebungsbereiche sind in den zwischen den Bauelementen angeordneten Zwischenbereichen Kühlluftströme hindurchleitbar. Somit wird die Wärme von den Bauelementen über das Material der Gehäuseteile und der an diesen ausgeformten Erhebungsbereiche an die Kühlluftströme weitergeleitet. Statt Kühlluft ist auch ein anderes Kühlmedium verwendbar, da die beiden Gehäuseteile die Bauelemente dicht umgeben und ein geschlossenes Gehäuse bilden, in welches nur Versorgungsleitungen durch Kabeldurchführungen führen, aber ansonsten keine weiteren Durchgangsöffnungen in den Innenraum vorhanden sind

Bei einer vorteilhaften Ausgestaltung ragt der Kühlkanal von der Außenseite des Gehäuseteils durch den Erhebungsbereich hindurch. Von Vorteil ist dabei, dass das Kühlmedium möglichst dicht an die Bauelemente heranführbar ist. Hierzu ist die Leiterplatte mit Ausnehmungen versehen, durch welche die Erhebungsbereiche hindurchragen. Erfindungsgemäß ist das Gehäuse der Anordnung aus der ersten Gehäuseteil und einem weiteren Gehäuseteil gebildet,
wobei die beiden Gehäuseteile gleichartig aufgebaut sind, insbesondere wobei Erhebungsbereiche der beiden Gehäuseteil einander berühren, insbesondere wobei die Kühlkanäle der einander berührenden Erhebungsbereiche ineinander münden. Von Vorteil ist dabei, dass das Gehäuse symmetrisch aufbaubar ist und somit nur wenige Teilesorten im Lager zu bevorraten sind.

Bei einer vorteilhaften Ausgestaltung ist das Gehäuseteil mit den Bauelementen kraftschlüssig verbunden, bevor die Lötverbindungen zwischen den Bauelementen, insbesondere zwischen den Anschlusselementen der Bauelemente, und der Leiterplatte hergestellt wird,
so dass die relative Lage der Bauelemente mittels des Gehäuseteils festgelegt ist ohne am Gehäuseteil auftretende zwischen den Bauelementen verlaufenden Verspannungskräften und/oder
so dass zusätzliche, bei dem kraftschlüssigen Verbinden entstehende Verspannungen zwischen den Bauelementen vermieden werden. Von Vorteil ist dabei, dass keine schädlichen Verspannungen im Gehäuseteil vorhanden sind und somit die Wandstärke entsprechend gering ausführbar ist. Außerdem werden die Lötverbindungen entlastet, wodurch die Fehlerrate erniedrigt und die Standzeit erhöht wird.

Bei einer vorteilhaften Ausgestaltung ist das erste Gehäuseteil als Fixierhilfe beim Löten, insbesondere als Löthilfe, verwendet, insbesondere so dass Verspannungskräfte vermieden werden. Von Vorteil ist dabei, dass die die Lötverbindungen entlastet werden. Somit ist die Standzeit derselben erhöht und die Wahrscheinlichkeit einer fehlerhaften Lötverbindung reduziert.

Bei einer vorteilhaften Ausgestaltung sind jeweils zwei, zueinander nächst benachbarte Bauelemente mittels zumindest eines Klemmelements voneinander beabstandet zur elektrischen Isolierung ihrer Oberflächen,
insbesondere wobei die Oberflächen der Bauelemente jeweils metallisch ausgeführt sind und/oder auf einem elektrischen Betriebspotential oder Nullpotential betrieben sind. Von Vorteil ist dabei, dass die Beabstandung und Isolierung mittels des Gehäuseteils gewährleistbar ist. Erfindungsgemäß liegt die Leiterplatte auf als Klemmelemente oder Stützabschnitte verwendbaren Bereichen des weiteren Gehäuseteils auf
und/oder wobei
die Klemmelemente und Stützabschnitte des ersten Gehäuseteils zum Verbinden der Bauelemente dienen und die als Klemmelemente verwendbaren Bereiche des zweiten Gehäuseteils als Leiterplatten-Auflage fungieren. Von Vorteil ist dabei, dass die Klemmelemente eine doppelte Verwendungsmöglichkeit bieten. Bei dem ersten Gehäuseteil werden sie zur Herstellung der Klemmverbindung und bei dem zweiten Gehäuseteil als eine Auflagefläche definierende Teile verwendet.

Weitere Vorteile ergeben sich aus den Unteransprüchen.

Die Erfindung wird nun anhand von Abbildungen näher erläutert:
In der Figur 1 ist eine Draufsicht auf ein Gehäuseteil 2 eines ersten erfindungsgemäßen Ausführungsbeispiels gezeigt.
In der Figur 2 ist eine Schrägansicht auf das Gehäuseteil 2 gezeigt.
In der Figur 3 ist ein vergrößerter Ausschnitt aus Figur 1 gezeigt, wobei die zwischen zwei Klemmelementen 4 erzeugbare Richtung der Klemmkraft, also Haltekraftwirkrichtung 1, verdeutlicht ist.
In der Figur 4 ist ein anderer vergrößerter Ausschnitt aus Figur 1 gezeigt, wobei die zwischen einem Klemmelement 4 und einem Stützabschnitt 5 erzeugbare Richtung der Klemmkraft, also Haltekraftwirkrichtung 1, verdeutlicht ist.
In der Figur 5 ist eine Schrägansicht des als Wellenlöthilfe eingesetzten Gehäuseteils 2 gezeigt samt der mit Energiespeicherzellen 52 zu bestückenden, insbesondere lötzuverbindenden Leiterplatte 50.
In der Figur 6 ist eine Schrägansicht auf einen Energiespeicher gezeigt, dessen Gehäuse aus zwei gleichartigen Gehäuseteilen 2 zusammengesetzt ist, wobei ein Deckelteil 61 mit dem ersten und mit der weiteren Gehäuseteil 2 mittels jeweiligen Schrauben 62 verbunden ist.
In der Figur 7 ist eine Draufsicht auf das Gehäuseteil 2 eines zweiten erfindungsgemäßen Ausführungsbeispiels gezeigt, welches im Gegensatz zum ersten erfindungsgemäßen Ausführungsbeispiel Kühlkanäle 80 aufweist.
In der Figur 8 ist eine Schrägansicht auf das Gehäuseteil 2 des zweiten erfindungsgemäßen Ausführungsbeispiels gezeigt, welches im Gegensatz zum ersten Kühlkanäle 80 aufweist, wobei keine Bauelemente verbunden sind mit dem Gehäuseteil 2.
In der Figur 9 ist eine Schrägansicht auf den Energiespeicher gezeigt, welcher zum zweiten Ausführungsbeispiel gehört und dessen Gehäuse aus zwei gleichartig aufgebauten Gehäuseteilen 2 zusammengesetzt ist.
In der Figur 10 ist Schnitt durch den erfindungsgemäßen Energiespeicher gezeigt, so dass die auf den Klemmelementen 4 aufliegende Leiterplatte 50 gezeigt ist.
In der Figur 11 ist eine Draufsicht des als Wellenlöthilfe eingesetzten Gehäuseteils 2 des ersten erfindungsgemäßen Ausführungsbeispiels nach Figur 1 bis gezeigt samt der mit Energiespeicherzellen 52, bevor sie mit der Leiterplatte bestückt, insbesondere lötverbunden sind.

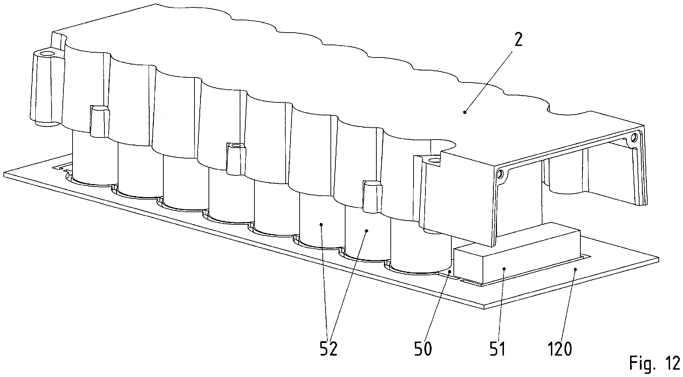

In der Figur 12 ist das Rahmenteil 120, insbesondere Nutzen, gezeigt, welches die Leiterplatte 50 umgibt beim Durchfahren des Wellenlötbades.

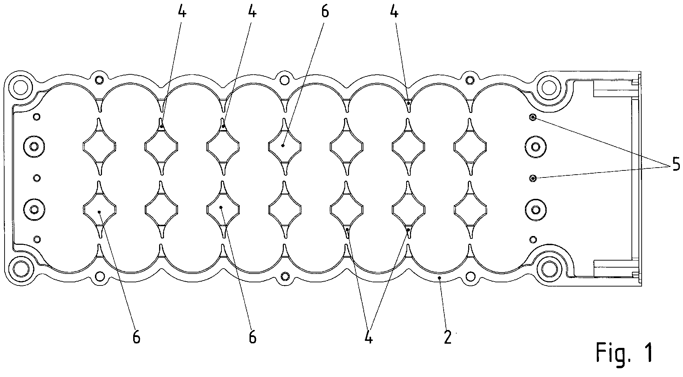

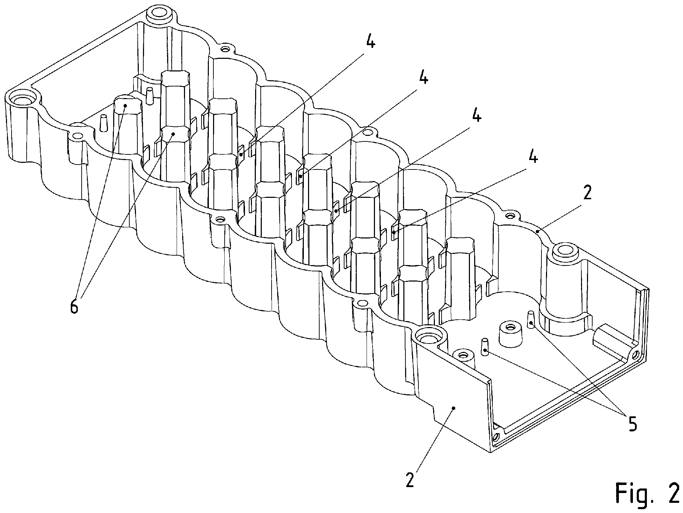

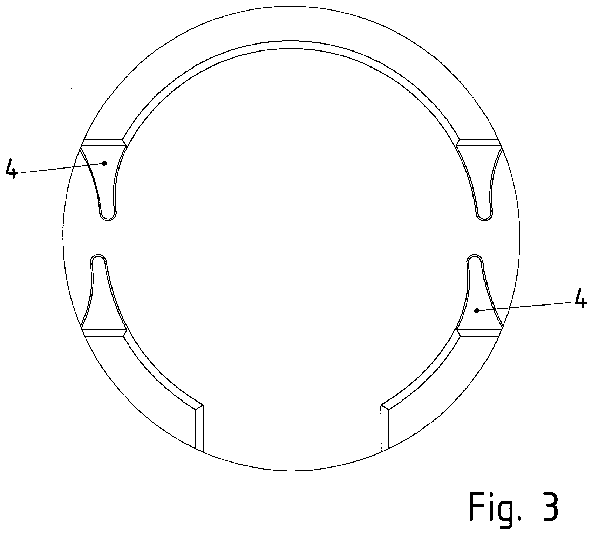

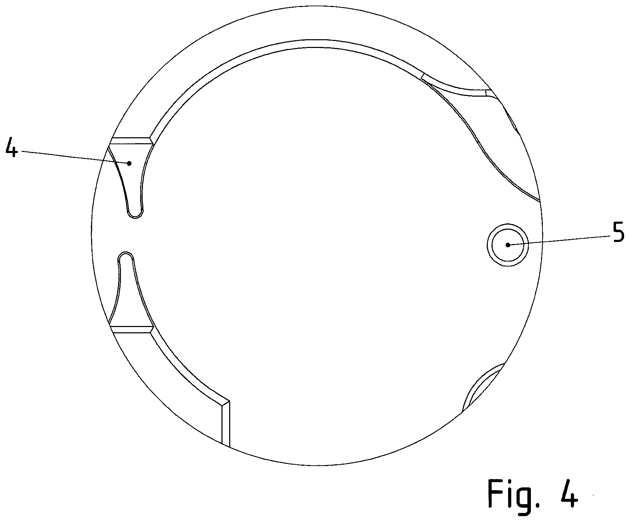

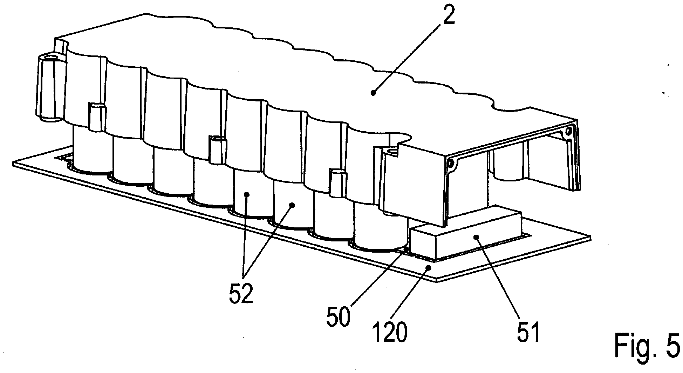

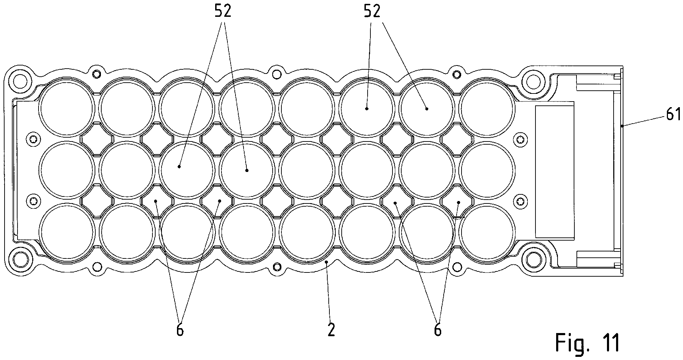

Das erste Ausführungsbeispiel ist in den Figuren 1 bis 6 und Figur 11 dargestellt und eignet sich besonders als Energiespeicher für den dezentralen Einsatz im Feld, also insbesondere auch im Nassbereich. Denn an der Oberfläche eintreffendes Wasser, beispielsweise bei Reinigung, fließt schnell ab und es sind keine besonderen Ausnehmungen vorhanden, in welchen sich Flüssigkeitsanteile absetzen könnten.

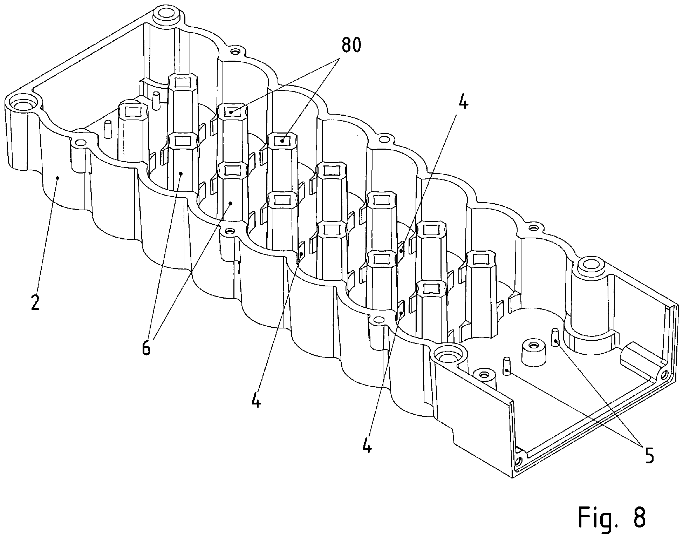

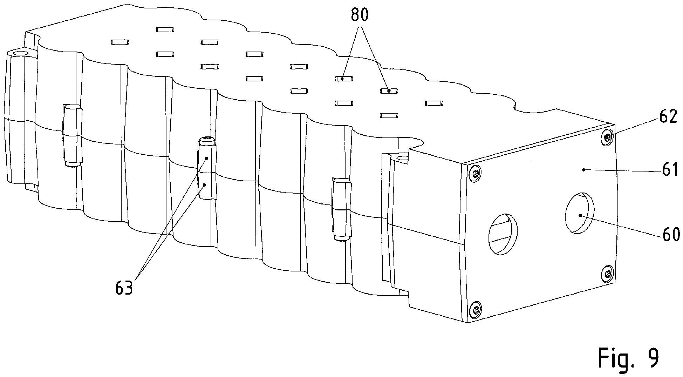

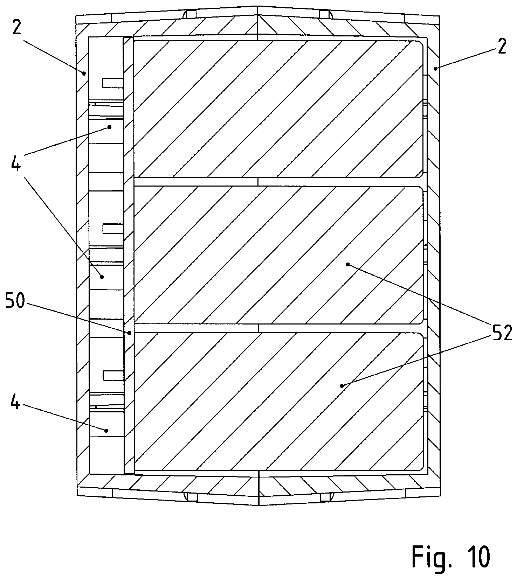

Das zweite Ausführungsbeispiel ist in den Figuren 8 bis 11 dargestellt und weist eine besonders hohe Leistungsdichte auf, da die Entwärmung besonders effektiv ausführbar ist, indem Kühlkanäle 80 vorgesehen sind.

Das Gehäuseteil 2 ist als schalenförmiges Teil ausgeführt, wobei Erhebungsbereiche 6 sich aus dem Schalenboden erhebend ausgeformt sind.

Am Schalenboden sind auch Aufnahmebereiche vorgesehen, welche regelmäßig voneinander beabstandet sind und nach Art einer endlichen zweidimensionalen Gitterstruktur angeordnet sind.

Jeder Aufnahmebereich wird an seinem Rand begrenzt durch jeweils zumindest ein Klemmelement 4. Weitere den Aufnahmebereich begrenzende Elemente sind ebenfalls vorhanden.

Somit ist bei Einschieben einer Energiespeicherzelle 52 in den Aufnahmebereich eine kraftschlüssige Verbindung, insbesondere Klemmverbindung, der Energiespeicherzelle mit dem Gehäuseteil 2 an dessen Innenseite ausführbar.

Das Gehäuseteil 2 ist vorzugsweise ein Kunststoff-Spritzgussteil.

Als Klemmelement 4 ist am Gehäuseteil 2 ein einstückig am Gehäuseteil 2 ausgeformter Bereich ausgeformt, der bei Einführen der Energiespeicherzelle elastisch verformt wird und somit eine Klemmung bewirkt.

Die inneren Aufnahmebereiche weisen hierzu zwei diametral an dem kreisförmigen Rand der Aufnahmebereiche sich gegenüberliegende Klemmelemente 4 auf.

Die äußeren Aufnahmebereiche weisen ein Klemmelement 4 auf, dem statt eines weiteren Klemmelements 4 ein Stützabschnitt 5 diametral gegenüber angeordnet ist, der ebenfalls einstückig am Gehäuseteil 2 ausgebildet ist. Der Stützabschnitt 5 ist weniger elastisch verformbar, insbesondere steifer, ausgebildet als das Klemmelement 4.

Auf diese Weise ist also eine Ansammlung von Energiespeicherzellen 52 kraftschlüssig verbindbar mit dem Gehäuseteil 2. Dabei sind die Energiespeicherzellen 52 der Ansammlung voneinander regelmäßig beabstandet, insbesondere nach Art des zweidimensionalen Gitters.

Die Energiespeicherzellen 52 sind als Kondensatoren ausgeführt und als elektronische Bauelemente auf der Leiterplatte 50 bestückt.

Zur Herstellung der Lötverbindung zwischen den Anschlussbeinchen der Energiespeicherzellen 52 und den Leiterbahnen der Leiterplatte 50 wird ein Wellenlötbad eingesetzt und beim Durchfahren des Lötbades die Leiterplatte 50 von einem in den Figuren nicht gezeigten Halterahmen aufgenommen. Mittels des mit einer Fördereinrichtung verbundenen Halterahmens wird die Leiterplatte durch das Lötbad gefahren, so dass die Lötverbindungen zwischen den Anschlussbeinchen der Energiespeicherzellen 52 und den Leiterbahnen der Leiterplatte 50 erzeugt werden.

An ihrem von der Leiterplatte 50 abgewandten Endbereich sind die Energiespeicherzellen 52 in die jeweiligen Aufnahmebereiche eingeschoben und zumindest kraftschlüssig verbunden mit dem Gehäuseteil 2. Auf diese Weise wird eine mechanische Stabilisierung der Energiespeicherzellen 52 erreicht. Außerdem sind die Energiespeicherzellen 52 schon mit dem Gehäuseteil 2 teilweise umgeben und somit schon teilweise gehäusebildend geschützt.

Nach dem Herstellen der Lötverbindung wird ein weiteres gleichartiges Gehäuseteil 2 auf die Leiterplatte 50 geschoben, die dabei auf den Klemmelementen 4 und Stützabschnitten 5 aufgelegt wird, und somit ein geschlossenes Gehäuse aus den beiden Gehäuseteilen 2 gebildet. Dabei fungiert also eines der Gehäuseteile 2 als Gehäuseunterteil und das andere als Gehäuseoberteil.

Die beiden Gehäuseteile 2 sind dabei dicht verbunden.

Die Klemmelemente 4 und Stützabschnitte 5 des weiteren Gehäuseteils 2 dienen also als Auflage für die Leiterplatte 50. Hingegen bewirken die Klemmelemente 4 und Stützabschnitte 5 des ersten Gehäuseteils 2 die Klemmverbindung zwischen den Energiespeicherzellen 52 und dem ersten Gehäuseteil 2.

Zusätzlich wird die Leiterplatte 50 schraubverbunden mit dem weiteren Gehäuseteil 2.

Die Energiespeicherzellen 52 sind vorzugsweise zylindrisch ausgeführt, so dass sie in einer quadratischen Gitterstruktur anordenbar sind. Hierbei werden die sich aus dem schalenförmigen Grundkörper des Gehäuseteils 2 sich erhebenden Erhebungsbereiche 6 im Zwischenbereich zwischen den kreiszylindrischen Mantelflächen der Energiespeicherzellen 52 angeordnet. Ein zusätzlicher Bedarf an Raumbereich für die Erhebungsbereiche 6 ist also nicht notwendig.

Die Klemmelemente 4 sind derart zwischen den Energiespeicherzellen 52 angeordnet, dass eine Beabstandung derselben von ihren jeweils nächstbenachbarten Energiespeicherzellen erreichbar ist. Die Klemmelemente 4 fungieren somit auch Elemente zur elektrischen Isolation zwischen nächstbenachbarten Energiespeicherzellen 52.

Die Erhebungsbereiche erheben sich vom schalenförmigen Grundkörper des Gehäuseteils in eine Höhe, welche auf dem Höhenniveau des Schaienrandes liegt. Auf diese Weise kommen die jeweils gegenüberstehenden Erhebungsbereiche 6 des ersten Gehäuseteils 2 und des weiteren Gehäuseteils 2 bei der Bildung des Gehäuses des Energiespeichers aufeinander zu liegen und es ist sogar eine Abstützung der Erhebungsbereiche aufeinander erreichbar.

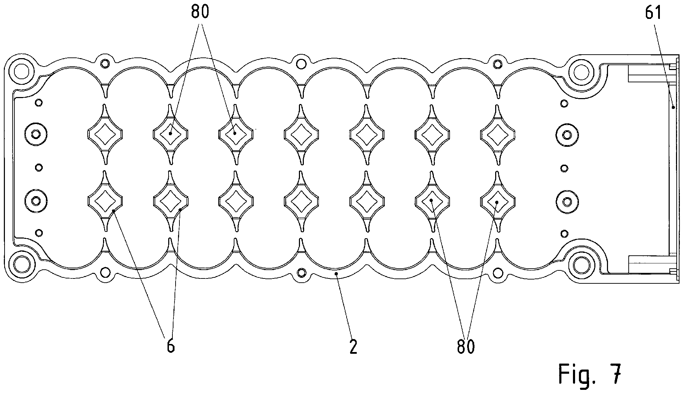

Bei dem zweiten Ausführungsbeispiel nach den Figuren 7 bis 10 weisen die Erhebungsbereiche mittig in sich angeordnete Kühlkanäle 80 auf, so dass bei Zusammensetzen des ersten Gehäuseteils 2 und des weiteren Gehäuseteils 2 der Kühlkanal eines ersten Erhebungsbereichs 6 mit dem Kühlkanal eines jeweiligen Erhebungsbereiches 6 des weiteren Gehäuseteils 2 ineinander münden.

Auf diese Weise ist eine Durchströmung der Kühlkanäle 80 mit einem Kühlmedium, wie Luft, Wasser, Öl oder dergleichen, in einfacher Weise ermöglicht und somit eine elektrische Entwärmung des Energiespeichers.

Das Bauteil 51 ist beispielhaft als Anschlusselement ausgeführt. Somit ist eine elektrische Verbindung von Versorgungsleitungen mittels des Bauteils 51 ausführbar, welches ebenfalls lötverbunden ist mit der Leiterplatte 50.

Auf der Leiterplatte 50 sind auch weitere elektronische Bauelemente anordenbar und auch Anzeigemittel, wie LCD-Zeilen, LED oder Display, elektrisch verbindbar, so dass eine Statusanzeige ausführbar ist. Hierzu sind die Anzeigemittel entweder in einer Ausnehmung des Gehäuseteils 2 angeordnet oder das Gehäuseteil 2 weist zumindest einen transparenten Teilbereich auf. Auch eine Ausbildung des Gehäuseteils aus transparentem Kunststoff ist ausführbar.

Dadurch dass das Gehäuseteil die Bauelemente vor dem Lötverbinden aufnimmt, werden die Bauelemente relativ zueinander positioniert, ohne dass wesentliche Verspannungen zwischen den Bauelementen verlaufen. Also treten keine wesentlichen Verspannungskraftlinien von einem Aufnahmebereich zu einem anderen Aufnahmebereich auf. Zwar wird jedes Bauelement kraftschlüssig von zwei Klemmelementen 4 oder einem Klemmelement 4 und einem Stützabschnitt 5 gehalten, jedoch verlaufen die zugehörigen wesentlichen Verspannungskraftlinien nur zwischen den beiden Klemmelementen 4 oder zwischen dem Klemmelement 4 und dem Stützabschnitt 5, also um einen einzigen Aufnahmebereich herum aber nicht von einem Aufnahmebereich zu einem anderen. Beim Herstellen der Lötverbindung wird nur die Leiterplatte 50 relativ zu den Bauelementen fixiert, wodurch keine weiteren wesentlichen Verspannungskraftlinien erzeugt werden. Zwar wird die Leiterplatte 50 dann an das Gehäuseteil 2 schraubverbunden, jedoch treten auch hierbei keine wesentlichen Verspannungskräfte auf, da die Leiterplatte 50 am Gehäuseteil 2 schon bei Durchfahren des Lötbades aufliegt. Alternativ ist die Schraubverbindung zwischen Gehäuseteil 2 und Leiterplatte 50 schon vor dem Durchfahren des Lötbades ausführbar und somit jede Verspannungskrafterzeugung vermeidbar.

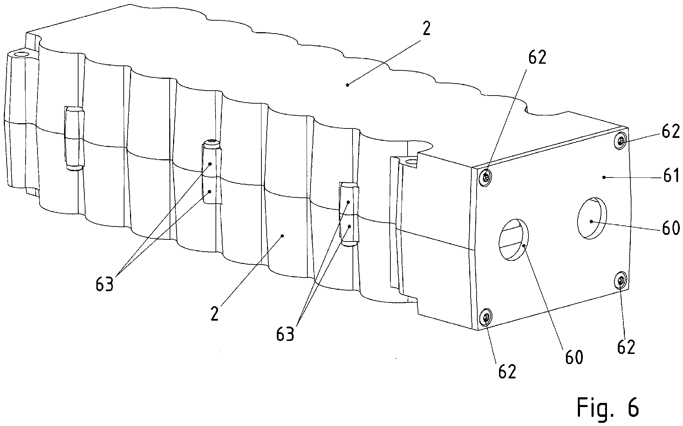

Wie in Figur 6 gezeigt wird eine Öffnung des Gehäuses durch ein Deckelteil 61 verschlossen, wobei Verbindungsschrauben 62 zum Verbinden mit dem ersten Gehäuseteil 2 und auch weitere Verbindungsschrauben 62 vorgesehen sind zum Verbinden mit dem weiteren Gehäuseteil 2. Die elektrischen Leitungen, insbesondere Versorgungsleitungen, sind durch Ausnehmungen 60 des Deckelteils 61 führbar, wobei mittels Kabeldurchführungen Dichtheit herstellbar ist. Alternativ sind auch die Gehäuseteile 2 derart ausführbar, dass jeweils eine Hälfte des Deckelteils 61 einstückig an ihnen ausgeformt ist, wobei die Trennlinie diametral durch die Ausnehmungen 60 führt. Somit sind die Verbindungsschrauben verzichtbar.

Bei einem weiteren erfindungsgemäßen Ausführungsbeispiel wird zusätzlich oder statt eines der oder statt mehrerer der oder statt aller Klemmelemente ein Federelement, Schaumstoff oder Vergussmasse eingesetzt, um die Haltekraft mittels elastischer Verformung zu bewirken.

Bei einem weiteren erfindungsgemäßen Ausführungsbeispiel wird beim Wellenlöten statt des Halterahmens ein Band oder Bänder zum Halten der Leiterplatte verwendet. Daher ist unter Halterahmen auch ganz allgemein eine Haltevorrichtung zu verstehen.

Bei einem weiteren erfindungsgemäßen Ausführungsbeispiel sind statt eines der oder statt aller Klemmelemente formschlüssige und/oder spielfreie Verbindungselemente vorgesehen. Beispielsweise sind am Gehäuseteil 2 einstückig ausgeformte, elastisch verformbare Nasenabschnitte vorhanden, die in entsprechende Vertiefungen der Energiespeicherzelle eingreifen. Somit ist eine spielfreie Klipsverbindung als Klemmelement einsetzbar. Die Klemmelemente müssen also nicht rein kraftschlüssig verbindend wirken sondern dürfen auch oder alternativ eine formschlüssige Verbindungswirkung aufweisen.

Bei einem weiteren erfindungsgemäßen Ausführungsbeispiel wird auf die Schraubverbindung zwischen Leiterplatte 50 und weiterem Gehäuseteil 2 verzichtet und stattdessen eine kraftschlüssige oder Klips-Verbindung eingesetzt. Hierzu weist dann das weitere Gehäuseteil 2 einen aus dem schalenförmigen Grundkörper herausragenden Nasenabschnitt auf, der elastisch verformbar ist und somit ein Einklipsen der Leiterplatte ermöglicht.

### Bezugszeichen liste

1 Haltekraftwirkrichtung
2 Gehäuseteil
4 Klemmelement
5 Stützabschnitt
6 Erhebungsbereich
50 Leiterplatte
51 Bauteil, auf der Leiterplatte 50 bestückt
52 Energiespeicherzellen, insbesondere Kondensatormodule, auf der Leiterplatte 50 bestückt
60 Ausnehmung
61 Deckelteil
62 Verbindungsschraube
80 Kühlkanal
120 Rahmenteil, insbesondere Nutzen

## Patentansprüche

1. Anordnung, insbesondere Energiespeicherzellenanordnung,
aufweisend
- Bauelemente mit elektrischen Anschlusselementen
- eine Leiterplatte (50)
- ein erstes Gehäuseteil (2)
wobei die Bauelemente Energiespeicherzellen (52) sind und wobei die Bauelemente zumindest kraftschlüssig mit dem Gehäuseteil (2) verbunden sind, wobei die elektrischen Anschlusselemente der Bauelemente mit der Leiterplatte (50), insbesondere mit den jeweiligen Leiterbahnabschnitten der Leiterplatte (50), stoffschlüssig verbunden, insbesondere lötverbunden, sind,
wobei das Gehäuseteil (2) zumindest einen Aufnahmebereich aufweist, in welchem zumindest ein Abschnitt eines Bauelements eingeführt und von zumindest einem Klemmelement (4) kraftschlüssig gehalten ist,
wobei dem jeweiligen Klemmelement (4) am Rand des Aufnahmebereichs diametral gegenüber ein weiteres Klemmelement (4) oder ein Stützabschnitt (5) angeordnet ist zum Verbinden eines jeweiligen Bauelements,
wobei das Gehäuse der Anordnung aus dem ersten Gehäuseteil (2) und einem weiteren Gehäuseteil (2) gebildet ist,
wobei die beiden Gehäuseteile (2) gleichartig aufgebaut sind,
wobei die Leiterplatte auf als Klemmelemente oder Stützabschnitte verwendeten Bereichen des weiteren Gehäuseteils aufliegt
wobei die Klemmelemente und Stützabschnitte des ersten Gehäuseteils die Bauelemente verbinden und die Leiterplatte aufliegt auf den als Klemmelemente verwendeten Bereichen des zweiten Gehäuseteils,
**dadurch gekennzeichnet, dass**
das Klemmelement (4) am Gehäuseteil (2) angeordnet ist und als elastisch verformbarer Bereich des Gehäuseteils (2) einstückig am Gehäuseteil (2) ausgeformt ist,
wobei der Bereich bei Einführen der Energiespeicherzelle (52) elastisch verformt wird und somit eine Klemmung, also das kraftschlüssige Halten, bewirkt.

2. Anordnung nach Anspruch 1,
**dadurch gekennzeichnet, dass**
die Bauelemente zwischen dem ersten Gehäuseteil (2) und der Leiterplatte (50) angeordnet sind.

3. Anordnung nach mindestens einem der vorangegangenen Ansprüche,
**dadurch gekennzeichnet, dass**
das Gehäuseteil (2) zumindest Aufnahmebereiche aufweist, in welchen jeweils zumindest ein Abschnitt eines jeweiligen Bauelements eingeführt und von zumindest einem jeweiligen Klemmelement (4) kraftschlüssig gehalten ist.

4. Anordnung nach mindestens einem der vorangegangenen Ansprüche,
**dadurch gekennzeichnet, dass**
das Bauelement zumindest einen zylindrischen, insbesondere kreiszylindrischen, Abschnitt aufweist,
insbesondere wobei der Aufnahmebereich ebenfalls als zylindrischer, insbesondere kreiszylindrischer, Abschnitt ausgebildet ist.

5. Anordnung nach mindestens einem der vorangegangenen Ansprüche,
**dadurch gekennzeichnet, dass**
das Gehäuseteils (2) aus einem elektrisch isolierenden Kunststoff ausgebildet ist,
insbesondere wobei zumindest ein Teilabschnitt des Gehäuseteils (2) aus optisch transparentem Material gebildet ist.

6. Anordnung nach mindestens einem der vorangegangenen Ansprüche,
**dadurch gekennzeichnet, dass**
das Gehäuseteil (2) zumindest einen am Gehäuseteil (2) einstückig ausgeformten Erhebungsbereich (6) aufweist, der in einem Zwischenraumbereich hineinragt, welcher zwischen, insbesondere vier, zueinander nächstbenachbarte Bauelemente hineinragt.

7. Anordnung nach mindestens einem der vorangegangenen Ansprüche,
**dadurch gekennzeichnet, dass**
zumindest ein Erhebungsbereich (6) einen Kühlkanal (80) aufweist, insbesondere einen durch den Erhebungsbereich (6) durchgehenden Kühlkanal (80), insbesondere einen mittig im Erhebungsbereich (6) angeordneten Kühlkanal (80).

8. Anordnung nach mindestens einem der vorangegangenen Ansprüche,
**dadurch gekennzeichnet, dass**
der Kühlkanal (80) von der Außenseite des Gehäuseteils (2) durch den Erhebungsbereich (6) hindurchragt.

9. Anordnung nach mindestens einem der vorangegangenen Ansprüche,
**dadurch gekennzeichnet, dass**
Erhebungsbereiche (6) der beiden Gehäuseteile (2) einander berühren,
insbesondere wobei die Kühlkanäle der einander berührenden Erhebungsbereiche (6) ineinander münden.

10. Anordnung nach mindestens einem der vorangegangenen Ansprüche,
**dadurch gekennzeichnet, dass**
jeweils zwei, zueinander nächst benachbarte Bauelemente mittels zumindest eines Klemmelements (4) voneinander beabstandet sind und ihre Oberflächen elektrisch isoliert,
insbesondere wobei die Oberflächen der Bauelemente jeweils metallisch ausgeführt sind und/oder auf einem elektrischen Betriebspotential oder Nullpotential betrieben sind.

11. Anordnung nach mindestens einem der vorangegangenen Ansprüche,
**dadurch gekennzeichnet, dass**
das Gehäuseteil (2) mit den Bauelementen kraftschlüssig verbunden ist, bevor die Lötverbindungen zwischen den Bauelementen und der Leiterplatte (50) hergestellt wird.

12. Anordnung nach mindestens einem der vorangegangenen Ansprüche,
**dadurch gekennzeichnet, dass**
das erste Gehäuseteil (2) als Fixierhilfe beim Löten, insbesondere als Löthilfe, verwendet ist.

## Claims

1. An arrangement, in particular an energy storage cell arrangement, having
- components having electrical connection elements,
- a printed circuit board (50)
- a first housing part (2),
wherein the components are energy storage cells (52) and wherein the components are connected to the housing part (2) at least with force fit,
wherein the electrical connection elements of the components are connected to the printed circuit board (50), in particular to the respective conductor track portions of the printed circuit board (50), with material fit, in particular solder-connected,
wherein the housing part (2) has at least one receiving region in which at least a portion of a component is inserted and held with force fit by at least one clamping element (4),
wherein, for the connection of a respective component, a further clamping element (4) or a supporting portion (5) is arranged diametrically opposite the respective clamping element (4) at the edge of the receiving region,
wherein the housing of the arrangement is formed by the first housing part (2) and a further housing part (2),
wherein the two housing parts (2) are designed in a similar manner,
wherein the printed circuit board lies on regions of the further housing part which are used as clamping elements or supporting portions,
wherein the clamping elements and supporting portions of the first housing part connect the components, and the printed circuit board lies on the regions of the second housing part which are used as clamping elements,
**characterised in that**
the clamping element (4) is arranged on the housing part (2) and is formed in one piece on the housing part (2) as a resiliently deformable region of the housing part (2),
wherein the region is resiliently deformed as the energy storage cell (52) is inserted and therefore realises a clamping action, i.e. the force-fitting holding action.

2. The arrangement according to Claim 1,
**characterised in that**
the components are arranged between the first housing part (2) and the printed circuit board (50).

3. The arrangement according to at least one of the preceding claims,
**characterised in that**
the housing part (2) at least has receiving regions in which at least a portion of a respective component is inserted in each case and is held with force fit by at least one respective clamping element (4).

4. The arrangement according to at least one of the preceding claims,
**characterised in that**
the component has at least one cylindrical, in particular circular cylindrical, portion,
in particular wherein the receiving region is likewise constructed as a cylindrical, in particular circular cylindrical, portion.

5. The arrangement according to at least one of the preceding claims,
**characterised in that**
the housing part (2) is constructed from an electrically insulating plastics material,
in particular wherein at least a sub-portion of the housing part (2) is formed from optically transparent material.

6. The arrangement according to at least one of the preceding claims,
**characterised in that**
the housing part (2) has a projecting region (6) which is formed in one piece on the housing part (2) and extends into a clearance region which extends between in particular four mutually closest-adjacent components.

7. The arrangement according to at least one of the preceding claims,
**characterised in that**
at least one projecting region (6) has a cooling channel (80), in particular a cooling channel (80) passing through the projecting region (6), in particular a cooling channel (80) arranged centrally in the projecting region (6).

8. The arrangement according to at least one of the preceding claims,
**characterised in that**
the cooling channel (80) extends through the projecting region (6) from the outside of the housing part (2).

9. The arrangement according to at least one of the preceding claims,
**characterised in that**
projecting regions (6) of the two housing parts (2) touch one another,
in particular wherein the cooling channels of the mutually touching projecting regions (6) lead into one another.

10. The arrangement according to at least one of the preceding claims,
**characterised in that**
in each case two mutually closest-adjacent components are spaced from one another by means of at least one clamping element (4) and their surfaces are electrically insulated,
in particular wherein the surfaces of the components are each of a metallic construction and/or are operated at an electric operating potential or zero potential.

11. The arrangement according to at least one of the preceding claims,
**characterised in that**
the housing part (2) is connected to the components with force fit before the soldered connections between the components and the printed circuit board (50) are produced.

12. The arrangement according to at least one of the preceding claims,
**characterised in that**
the first housing part (2) is used as a securing aid during soldering, in particular as a soldering aid.

## Revendications

1. Agencement, en particulier agencement de cellules d'accumulation d'énergie, présentant
- des éléments structuraux comportant des éléments de connexion électrique,
- une carte de circuit imprimé (50),
- une première partie de boîtier (2),
les éléments structuraux étant des cellules d'accumulation d'énergie (52) et étant reliés au moins à force à la partie de boîtier (2),
les éléments de connexion électrique des éléments structuraux étant reliés par liaison de matière, en particulier brasés, à la carte de circuit imprimé (50), en particulier aux sections de piste conductrice respectives de la carte de circuit imprimé (50),
la partie de boîtier (2) présentant au moins une zone de réception dans laquelle au moins une section d'un élément structural est introduite et maintenue à force par au moins un élément de serrage (4),
un autre élément de serrage (4) ou une section d'appui (5) étant disposé(e) sur le bord de la zone de réception de manière diamétralement opposée à l'élément de serrage (4) respectif pour relier un élément structural respectif,
le boîtier de l'agencement étant formé de la première partie de boîtier (2) et d'une autre partie de boîtier (2), les deux parties de boîtier (2) étant constituées de manière similaire,
la carte de circuit imprimé reposant sur des zones de l'autre partie de boîtier utilisées comme éléments de serrage ou sections d'appui,
les éléments de serrage et sections d'appui de la première partie de boîtier reliant les éléments structuraux et la carte de circuit imprimé reposant sur les zones de la deuxième partie de boîtier utilisées comme éléments de serrage,
**caractérisé en ce**
**que** l'élément de serrage (4) est disposé sur la partie de boîtier (2) et réalisé d'une seule pièce sur la partie de boîtier (2) sous la forme d'une section déformable élastiquement de la partie de boîtier (2),
la zone étant déformée élastiquement et produisant ainsi un serrage, c'est-à-dire le maintien à force, lors de l'introduction de la cellule d'accumulation d'énergie (52).

2. Agencement selon la revendication 1,
**caractérisé en ce**
**que** les éléments structuraux sont disposés entre la première partie de boîtier (2) et la carte de circuit imprimé (50).

3. Agencement selon au moins l'une des revendications précédentes,
**caractérisé en ce**
**que** la partie de boîtier (2) présente au moins des zones de réception dans chacune desquelles au moins une section d'un élément structural respectif est introduite et maintenue à force par au moins un élément de serrage (4) respectif.

4. Agencement selon au moins l'une des revendications précédentes,
**caractérisé en ce**
**que** l'élément structural présente au moins une section cylindrique, en particulier cylindrique circulaire,
en particulier la zone de réception étant également réalisée sous la forme d'une section cylindrique, en particulier cylindrique circulaire.

5. Agencement selon au moins l'une des revendications précédentes,
**caractérisé en ce**
**que** la partie de boîtier (2) est constituée d'une matière plastique électriquement isolante,
en particulier au moins une section partielle de la partie de boîtier (2) étant formée d'un matériau optiquement transparent.

6. Agencement selon au moins l'une des revendications précédentes,
**caractérisé en ce**
**que** la partie de boîtier (2) présente au moins une zone surélevée (6) formée d'une seule pièce sur la partie de boîtier (2), laquelle fait saillie dans une zone spatiale intermédiaire qui fait saillie entre, en particulier, quatre éléments structuraux mutuellement adjacents.

7. Agencement selon au moins l'une des revendications précédentes,
**caractérisé en ce**
**qu'**au moins une zone surélevée (6) présente un canal de refroidissement (80), en particulier un canal de refroidissement (80) passant à travers la zone surélevée (6), en particulier un canal de refroidissement (80) disposé centralement dans la zone surélevée (6).

8. Agencement selon au moins l'une des revendications précédentes,
**caractérisé en ce**
**que** le canal de refroidissement (80) passe à travers la zone surélevée (6) depuis le côté extérieur de la partie de boîtier (2).

9. Agencement selon au moins l'une des revendications précédentes,
**caractérisé en ce**
**que** les zones surélevées (6) des deux parties de boîtier (2) se touchent,
en particulier les canaux de refroidissement des zones surélevées (6) qui se touchent débouchant l'un dans l'autre.

10. Agencement selon au moins l'une des revendications précédentes,
**caractérisé en ce**
**que** chaque fois deux éléments structuraux mutuellement adjacents sont espacés l'un de l'autre et leurs surfaces électriquement isolées au moyen d'au moins un élément de serrage (4),
en particulier les surfaces des éléments structuraux étant chaque fois réalisées en métal et/ou exploitées à un potentiel électrique de fonctionnement ou à un potentiel nul.

11. Agencement selon au moins l'une des revendications précédentes,
**caractérisé en ce**
**que** la partie de boîtier (2) est reliée à force aux éléments structuraux avant que les brasures entre les éléments structuraux et la carte de circuit imprimé (50) soient réalisées.

12. Agencement selon au moins l'une des revendications précédentes,
**caractérisé en ce**
**que** la première partie de boîtier (2) est utilisée comme aide à la fixation lors du brasage, en particulier comme aide au brasage.
